# EUROPÄISCHE PATENTSCHRIFT

(11) **EP 0 517 732 B1**
(45) Veröffentlichungstag und Bekanntmachung des Hinweises auf die Patenterteilung: **13.04.1994**
(21) Anmeldenummer: 91904197.0
(22) Anmeldetag: 25.02.1991
(51) Int. Cl.: B60H 1/28

(54) **ANORDNUNG ZUR ZUFÜHRUNG VON FRISCHLUFT ZUM INNENRAUM EINES KRAFTFAHRZEUGES**
ARRANGEMENT FOR INTRODUCING FRESH AIR INTO THE INTERIOR OF A MOTOR VEHICLE
DISPOSITIF D'AMENEE D'AIR FRAIS A L'INTERIEUR D'UN VEHICULE A MOTEUR

(30) Priorität: 28.02.1990 DE 4006208
(43) Veröffentlichungstag der Anmeldung: 16.12.1992
(73) Patentinhaber: AUDI AG, 85045 Ingolstadt (DE)
(72) Erfinder: CONEN, Dieter, D-7107 Neckarsulm (DE); STEGE, Jürgen, D-8069 Rohrbach (DE)
(86) Internationale Anmeldenummer: EP9100344
(87) Internationale Veröffentlichungsnummer: WO9112974

(56) Entgegenhaltungen:
- DE-A- 3 330 951
- GB-A- 1 083 465
- US-A- 2 975 696
- US-A- 3 157 104
- US-A- 3 747 500
- US-A- 4 152 021

## Beschreibung

Die Erfindung bezieht sich auf eine Anordnung zur Zuführung von Frischluft zum Innenraum eines Kraftfahrzeuges entsprechend dem Oberbegriff des Anspruchs 1. Eine gattungsgemäße Anordnung ist aus der DE-A-33 30 951 bekannt.

Üblicherweise erfolgt die Zuführung der Frischluft durch den Spalt zwischen der Windschutzscheibe und der benachbarten Kante der Motorhaube in den Wasserkasten und von dort in die Luftdurchtrittsöffnung zum Gebläse der Heizungs- oder Klimaanlage. Um bei Regen den Eintritt von Wasser in die Luftdurchtrittsöffnung zu vermeiden, ist oftmals der mittlere Bereich des Wasserkastens, in welchem sich die Luftdurchtrittsöffnung befindet, durch eine Platte abgedeckt, so daß die Luft nur an den beiden seitlichen Enden des Wasserkasten in diesen eintreten kann. Die Luft strömt dann von den beiden Enden zur Mitte hin durch den Wasserkasten, wobei das Wasser abgeschieden wird und durch einen Ablauf aus dem Wasserkasten abfließen kann. Da im Wasserkasten häufig die Fahrzeugbatterie sowie eine Vielzahl von Bauteilen und Leitungen untergebracht sind, wird die Luftströmung zur Luftdurchtrittsöffnung stark behindert.

Der Erfindung liegt die Aufgabe zugrunde, die Zuführung von Frischluft zum Fahrzeuginnenraum zu verbessern. Diese Aufgabe wird erfindungsgemäß durch die im Kennzeichen des Anspruchs 1 angegebenen Merkmale gelöst.

Bei dem erfindungsgemäßen Vorschlag wird durch die Ausbildung der normalerweise sowieso vorhandenen und erforderlichen Verstärkung der Motorhaube als Luftführungskanal eine ungehinderte Luftzuführung zur Luftdurchtrittsöffnung ohne zusätzliche Bauteile und ohne zusätzlichen Raumbedarf erreicht.

Vorzugsweise ist die Lufteintrittsöffnung bzw. sind die Lufteintrittsöffnungen an der Unterseite der den Kanal bildenden Verstärkung angeordnet. Dadurch wird die Luft von unten nach oben aus dem Wasserkasten in die Lufteintrittsöffnung(en) gesaugt, wodurch sichergestellt wird, daß weitgehend wasserfreie Luft angesaugt wird. Die Wasserabscheidung vor dem Eintritt der Luft in den Kanal kann noch dadurch verbessert werden, daß in die bzw. jede Lufteintrittsöffnung ein Filter eingesetzt wird. Dieses Filter kann ein Grobfilter in Form eines Siebes sein, an welchem die Wassertröpfchen hängenbleiben, oder ein Feinfilter, das eine effektive Filterung der Luft bewirkt. Die Luftdurchtrittsöffnung im Wasserkasten oder die Luftaustrittsöffnung an der Unterseite des Kanals kann von einer Dichtung umgeben sein, die bei geschlossener Motorhaube eine gegenüber dem Wasserkasten abgedichtete Verbindung zwischen diesen Öffnungen herstellt. Dadurch kann die erwähnte Abdeckplatte für den mittleren Bereich des Wasserkastens entfallen, wenn sie nicht aus anderen Gründen benötigt wird.

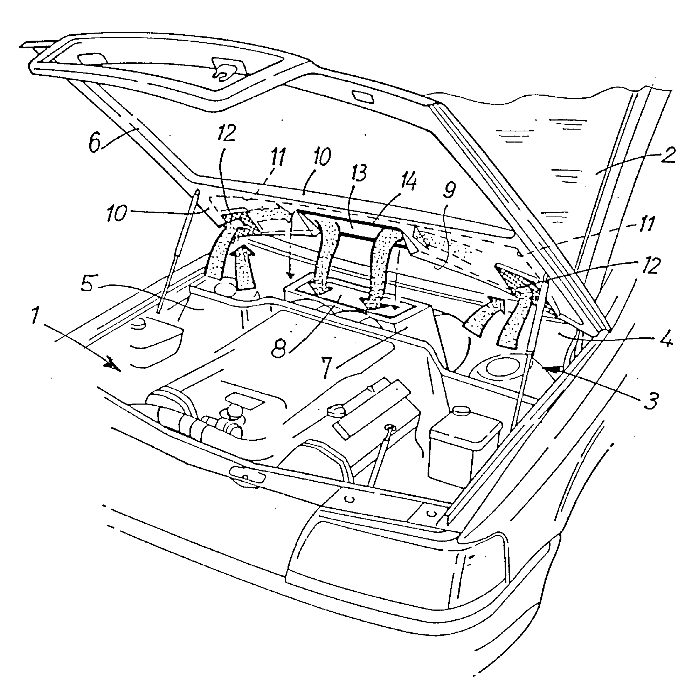

Ein Ausführungsbeispiel der Erfindung wird im folgenden unter Bezugnahme auf die Zeichnung beschrieben, die in perspektivischer Darstellung das Vorderteil eines Kraftfahrzeuges mit geöffneter Motorhaube zeigt.

Im Motorraum 1 des Kraftfahrzeuges ist vor der Windschutzscheibe 2 ein Wasserkasten 3 vorgesehen, der sich im wesentlichen über die Breite des Fahrzeuges erstreckt. Der Wasserkasten 3 ist einerseits von einer dem Innenraum des Fahrzeuges zugewandten Stirnwand 4 begrenzt und andererseits gegenüber dem Motorraum 1 durch eine Seitenwand 5 abgeschottet. Eine Motorhaube 6 deckt in geschlossenem Zustand den Wasserkasten 3 ab. Im Wasserkasten 3 ist im Ausführungsbeispiel eine Klimaanlage 7 angeordnet, die auf ihrer Oberseite eine Frischluft-Ansaugöffnung 8 aufweist. Die Motorhaube 6 ist auf ihrer Unterseite parallel zu ihrer der Windschutzscheibe 2 zugewandten Kante 9 mit einer sich im wesentlichen über die ganze Breite der Motorhaube 6 erstreckenden Verstärkung 10 in Form eines Hohlprofils versehen, das einen Frischluft-Zuführungskanal 11 bildet. Auf der Unterseite der Verstärkung 10 sind in dem Bereich, der den Wasserkasten 3 bei geschlossener Motorhaube abdeckt, nahe jedem Ende des Kanals 11 eine Lufteintrittsöffnung 12 und in der Mitte eine Luftaustrittsöffnung 13 vorgesehen, die bei geschlossener Motorhaube mit der Luftansaugöffnung 8 der Klimaanlage 7 korrespondiert. Bei geschlossener Motorhaube gelangt die Luft durch den Spalt zwischen der hinteren Kante 9 der Motorhaube 6 und der Windschutzscheibe 2 in den Wasserkasten 3 und strömt von dort nach oben durch die Lufteintrittsöffnungen 12 in den Kanal 11 und durch die Luftaustrittsöffnung 13 in die Luftansaugöffnung 8. Dadurch, daß die Luft aus dem Wasserkasten 3 nach oben in den Kanal 11 einströmt, wird erreicht, daß weitgehend wasserfreie Luft angesaugt wird. Dieser Effekt kann durch Anordnung von Luftfiltern in den Lufteintrittsöffnungen 12 verstärkt werden. Diese Filter können als Grobfilter in Form von Sieben oder Gittern oder auch als Feinfilter zur Vermeidung von Geruchsbelästigung ausgebildet sein.

Die Luftaustrittsöffnung 13 ist von einer Dichtung 14 umgeben, so daß bei geschlossener Motorhaube eine dichte Verbindung zwischen den Öffnungen 8 und 13 besteht.

Durch die Ausbildung der Verstärkung 10 als Frischluftkanal wird eine widerstandsarme Luftströmung zur Luftansaugöffnung 8 ohne zusätzliche Bauteile und ohne zusätzlichen Platzbedarf erreicht.

Im Ausführungsbeispiel ist die Motorhaube 6 im Bereich ihrer hinteren Kante 9 schwenkbar mit der Fahrzeugkarosserie verbunden. Selbstverständlich läßt sich die gezeigte Anordnung auch bei einer Motorhaube verwirklichen, deren Schwenkachse vorne liegt.

## Patentansprüche

1. Anordnung zur Zuführung von Frischluft zum Innenraum eines Kraftfahrzeuges, das vor der Windschutzscheibe (2) einen Wasserkasten (3) aufweist, der einerseits von einer dem Innenraum zugewandten Stirnwand (4) und andererseits von einer dem Motorraum (1) zugewandten Seitenwand (5) begrenzt und nach oben von einer Motorhaube (6) abgedeckt ist und in dem eine Luftansaugöffnung (8) einer Heizungs- oder Klimaanlage angeordnet ist,
**dadurch** **gekennzeichnet**
daß die Motorhaube (6) auf ihrer Unterseite parallel zu ihrer der Windschutzscheibe (2) zugewandten Kante mit einer einen Frischluftkanal (11) bildenden Verstärkung (10) versehen ist, die in ihrem den Wasserkasten (3) bei geschlossener Motorhaube abdeckenden Bereich an mindestens einem Ende eine Lufteintrittsöffnung (12) und auf ihrer Unterseite eine Luftaustrittsöffnung (13) aufweist, die bei geschlossener Motorhaube mit der Luftansaugöffnung (8) im Wasserkasten (3) korrespondiert.

2. Anordnung nach Anspruch 1 bei einem Kraftfahrzeug, dessen Wasserkasten sich im wesentlich über die Breite des Motorraumes erstreckt, dadurch gekennzeichnet, daß sich die Motorhauben-Verstärkung (10) mit dem Frischluftkanal (11) im wesentlichen über die Breite der Motorhaube (6) erstreckt.

3. Anordnung nach Anspruch 1 oder 2, dadurch gekennzeichnet, daß an jedem Ende des Kanals (11) eine Lufteintrittsöffnung (12) vorgesehen ist.

4. Anordnung nach einem der Ansprüche 1 bis 3, dadurch gekennzeichnet, daß die Lufteintrittsöffnung(en) (12) auf der Unterseite der Verstärkung (10) angeordnet ist bzw. sind.

5. Anordnung nach einem der Ansprüche 1 bis 4, dadurch gekennzeichnet, daß in die bzw. jede Lufteintrittsöffnung (12) ein Filter eingesetzt ist.

6. Anordnung nach einem der vorhergehenden Ansprüche, dadurch gekennzeichnet, daß die Luftansaugöffnung (8) oder die Luftaustrittsöffnung (13) von einer Dichtung (14) umgeben ist, die bei geschlossener Motorhaube (6) eine gegenüber dem Wasserkasten (3) abgedichtete Verbindung zwischen diesen Öffnungen herstellt.

## Claims

1. Arrangement for supplying fresh air to the interior of a motor vehicle comprising a water tank (3) in front of the windscreen (2), which tank is bounded on one side by an end wall (4) facing the interior and on the other by a side wall (5) facing the engine compartment (1), is covered at the top by an engine bonnet (6) and in which an air intake opening (8) of a heating or air conditioning system is arranged, characterised in that the engine bonnet (6) is provided with a reinforcement (10) on its underside parallel to its edge facing the windscreen (2), which reinforcement forms a fresh air duct (11) and comprises in its area which covers the water tank (3) when the engine bonnet is closed an air inlet opening (12) at least at one end and an air outlet opening (13) at its underside, which opening (13) corresponds to the air intake opening (8) in the water tank (3) when the engine bonnet is closed.

2. Arrangement according to claim 1 in a motor vehicle whose water tank extends substantially over the width of the engine compartment, characterised in that the engine bonnet reinforcement (10) with the fresh air duct (11) extends substantially over the width of the engine bonnet (6).

3. Arrangement according to claim 1 or 2, characterised in that an air inlet opening (12) is provided at each end of the duct (11).

4. Arrangement according to one of claims 1 to 3, characterised in that the air inlet opening(s) 12 is/are arranged at the underside of the reinforcement (10).

5. Arrangement according to one of claims 1 to 4, characterised in that a filter is inserted in the or each air inlet opening (12).

6. Arrangement according to one of the preceding claims, characterised in that the air intake opening (8) or the air outlet opening (13) is surrounded by a seal (14) which establishes a connection between these openings which is sealed off from the water tank (3) when the engine bonnet (6) is closed.

## Revendications

1. Agencement pour l'alimentation en air frais de l'intérieur d'un véhicule, présentant devant le pare-brise (2) un diffuseur d'air (3) limité par une paroi frontale (4) tournée vers l'intérieur, d'une part, par une paroi latérale (5) tournée vers le bloc-moteur (1), d'autre part, recouvert vers le haut par un capot (6), et dans lequel est disposé un orifice d'aspiration d'air (8) d'un système de chauffage ou de climatisation, caractérisé en ce que le capot (6) est muni, sur sa face inférieure et parallèlement à son rebord tourné vers le pare-brise (2), d'un renforcement (10) formant un conduit d'air frais (11) et présentant, dans sa zone recouvrant le diffuseur d'air (3) en position de fermeture du capot, un orifice d'admission d'air (12) sur une extrémité au moins, et un orifice de sortie d'air (13) sur son côté inférieur, l'orifice précité correspondant à l'orifice d'aspiration d'air (8) dans le diffuseur (3) à l'état de fermeture du capot.

2. Agencement suivant la revendication 1 sur un véhicule, dont le diffuseur d'air s'étend essentiellement sur la largeur du bloc-moteur, caractérisé en ce que le renforcement (10) du capot, avec le conduit d'air frais (11), s'étend essentiellement sur la largeur du capot (6).

3. Agencement suivant l'une des revendications 1 et 2, caractérisé en ce qu'un orifice d'admission d'air (12) est prévu sur chaque extrémité du conduit (11).

4. Agencement suivant l'une quelconque des revendications 1 à 3, caractérisé en ce que le(s) orifice(s) d'admission d'air (12) est et/ou sont disposé(s) sur le côté inférieur du renforcement (10).

5. Agencement suivant l'une quelconque des revendications 1 à 4, caractérisé en ce qu'un filtre est monté dans le et/ou dans chaque orifice d'admission d'air (12).

6. Agencement suivant l'une quelconque des revendications précédentes, caractérisé en ce que l'orifice d'aspiration d'air (8) ou l'orifice de sortie d'air (13) est entouré d'un joint (14), qui crée une liaison étanche entre ces orifices par rapport au diffuseur d'air (3), en position de fermeture du capot (6).
